# EUROPÄISCHE PATENTSCHRIFT

(11) **EP 1 074 454 B1**
(45) Veröffentlichungstag und Bekanntmachung des Hinweises auf die Patenterteilung: **07.12.2005**
(21) Anmeldenummer: 00112352.0
(22) Anmeldetag: 09.06.2000
(51) Int. Cl.: B62D 15/02

(54) **Lenkwinkelmesseinrichtung**
Steering angle measuring device
Dispositif de mesure d'angle de braquage

(30) Priorität: 06.08.1999 DE 19937120
(43) Veröffentlichungstag der Anmeldung: 07.02.2001
(73) Patentinhaber: Valeo Schalter und Sensoren GmbH, 74321 Bietigheim-Bissingen (DE)
(72) Erfinder: Poslowsky, Georg, 74348 Lauffen am Neckar (DE)
(74) Vertreter: Dreiss, Fuhlendorf, Steimle & Becker

(56) Entgegenhaltungen:
- DD-A- 151 999
- US-A- 5 061 195

## Beschreibung

Die Erfindung betrifft eine Lenkwinkelmesseinrichtung mit den Merkmalen des Oberbegriffs des Anspruchs 1. Die Erfindung betrifft außerdem ein Verfahren zur Bestimmung des Lenkwinkels mit den Merkmalen des Oberbegriffs des Anspruchs 6.

Solche Flachbandkabel, die gelegentlich auch als Wickelfedern oder Kontaktspiralen bezeichnet werden, dienen dazu, an dem Lenkrad vorhandene Schalter, Sensoren oder sonstige elektrische oder elektronische Bauteile, die mit dem Lenkrad drehfest verbunden sind, mittels elektrischen Leitungen mit anderen elektrischen oder elektronischen Bauteilen oder auch Auswerteeinheiten zu verbinden, die nicht der Drehbewegung des Lenkrades folgen. Dazu weist ein solches Flachbandkabel in der Regel eine Vielzahl von nebeneinander liegenden, gegenseitig isolierten Leiterbahnen auf. Dadurch, dass ein solches Flachbandkabel an seinem einen Ende an dem drehbaren Lenkrad und mit seinem anderen Ende ortsfest und damit nicht der Drehbewegung des Lenkrads folgend angeordnet ist, wird das spiralförmige Flachbandkabel bei Drehung des Lenkrades in die eine Richtung aufgewickelt, bei Drehung in die andere Richtung abgewickelt. Das Flachbandkabel ist dabei so ausgelegt und angeordnet, dass es das Lenkverhalten des Lenkrades nicht beeinträchtigt. ,

Aus dem Stand der Technik bekannte Lenkwinkelmesseinrichtungen sind regelmäßig entweder oberhalb oder unterhalb des Flachbandkabels am Lenkrad bzw. an der Lenksäule des Fahrzeuges angeordnet. Bekannte Ausführungsformen solcher Lenkwinkelmesseinrichtungen sind zweiteilig ausgestaltet, wobei ein Teil die Anzahl der absoluten Drehungen des Lenkrades bzw. der Lenksäule bestimmt. Hierbei finden regelmäßig mechanisch aufgebaute Schrittzählwerke Verwendung, die von einer Nulllage aus die vollen Umdrehungen des Lenkrades auf- oder Abwärtszählen. Als zweites Teil einer solchen bekannten Lenkwinkelmesseinrichtung wird der Lenkwinkel innerhalb einer vollen Umdrehung gemessen. Dazu finden bspw. nach dem Gray-Code arbeitende Messverfahren Verwendung.

Ein solcher Stand der Technik weist den Nachteil auf, dass um das Lenkrad bzw. um die Lenksäule verschiedene Bauteile, nämlich das Flachbandkabel, ein die vollen Umdrehungen der Lenksäule bestimmendes Bauteil und ein den Lenkwinkel innerhalb einer Umdrehung bestimmendes Bauteil vorhanden ist. Durch das Vorhandensein der verschiedenen Bauteile ist ein entsprechender Bauraum um die Lenksäule des Fahrzeuges vonnöten, dessen Schaffung problematisch ist.

Aus der DD-A-151 999 ist eine Messeinrichtung für Winkelbewegungen bekannt geworden die die Merkmale des Oberbegriffs des Anspruchs 1 aufweist, aber nicht in einer Lenksäule verwendet wird. Diese Messeinrichtung weist, eine Messfeder auf, an der ein Dehnungsmessstreifen befestigt ist, der die Dehnung bzw. Stauchung der Feder erfasst, wenn auf diese eine Kraft einwirkt. Es hat sich gezeigt, dass das Messergebnis stakt vom Befestigungsort des Dehnungsmessstreifen abhängt.

Der vorliegenden Erfindung liegt deshalb die Aufgabe zugrunde, eine Lenkwinkelmesseinrichtung bereitzustellen, deren Messfehler geringer ist.

Zur Lösung der Aufgabe wird eine Lenkwinkelmesseinrichtung vorgeschlagen, die die Merkmale des Anspruchs 1 aufweist.

Außerdem wird zur Lösung der Aufgabe ein Verfahren vorgeschlagen, das die Merkmale des Anspruchs 6 aufweist.

Der erfindungsgemäße Gegenstand sowie das erfindungsgemäße Verfahren haben dabei den Vorteil, dass der Lenkwinkel über die Dehnung und/oder Biegung des ohnehin um die Lenksäule des Fahrzeuges vorhandenen Flachbandkabels sehr genau bestimmt werden kann, ohne dass sich der Bauaufwand erheblich vergrößert. Da lediglich das Flachbandkabel mit entsprechenden Messelementen zur Bestimmung des Lenkwinkels erforderlich ist, wird erfindungsgemäß eine Bauteilreduzierung der um die Lenksäule vorhandenen Bauteile erreicht. Dabei sind am oder im Flachbandkabel elektrische Leiterbahnen vorhanden, die das wenigstens eine Messelement mit der Auswerteeinheit verbinden. Da das Flachbandkabel ohnehin schon eine große Anzahl von Leiterbahnen enthält, ist es unproblematisch, zusätzlich Leiterbahnen für das wenigstens eine Messelement vorzusehen.

Nach einer vorteilhaften Ausgestaltung der Erfindung ist das wenigstens eine Messelement ein Dehnmessstreifen oder ein Dehnungsmesssensor. Solche Dehnungsmesselemente sind Serienbauteile, die sehr genau und sehr funktionssicher arbeiten, und dennoch sehr kostengünstig sind.

Nach einer besonders vorteilhaften Ausgestaltung der Erfindung ist vorgesehen, dass mehrere Messelemente in äquidistanten Abständen am Flachbandkabel angeordnet sind. Durch die Verwendung mehrere Messelemente kann ein genaueres Messergebnis, bspw. aus Mittelung der einzelnen Messdaten, erzielt werden.

Nach einer Variante der Erfindung bestimmt die Auswerteeinheit die absolute Anzahl der Lenkrad- bzw. Lenksäulenumdrehungen. Eine solche Ausgestaltung weist den Vorteil auf, dass an die Genauigkeit der Messung keine allzu hohen Anforderungen zu stellen sind. Bei dieser Ausgestaltung der Erfindung kann gegenüber dem Stand der Technik auf insbesondere ein mechanisch arbeitendes Schrittzählwerk, das die vollen Umdrehungen der Lenkradsäule auf- und abwärts zählt, verzichtet werden.

Bei einer anderen vorteilhaften Ausgestaltung der Erfindung ist vorgesehen, dass die Auswerteeinheit den absoluten Lenkwinkel bestimmt. Dies weist insbesondere den Vorteil auf, dass eine weitere Lenkwinkelmesseinrichtung, die bspw. den Winkel innerhalb einer Lenkradumdrehung bestimmt, entfallen kann. Bei einer solchen Ausgestaltung ist allerdings zu berücksichtigen, dass an die Messgenauigkeit sowie an das Biege- und Dehnungsverhalten des spiralförmigen Flachbandkabels hohe Anforderungen zu stellen sind.

Weitere vorteilhafte Ausgestaltungen und Einzelheiten der Erfindung sind der nachfolgenden Beschreibung zu entnehmen, in der die Erfindung anhand des in der Zeichnung dargestellten Ausführungsbeispiel näher beschrieben und erläutert ist.

Es zeigen:
- Fig. 1: ein Flachbandkabel mit einem Dehnungsmessstreifen in perspektivischer Ansicht; und
- Fig. 2: ein Flachbandkabel mit drei Dehnungsmessstreifen in Draufsicht.

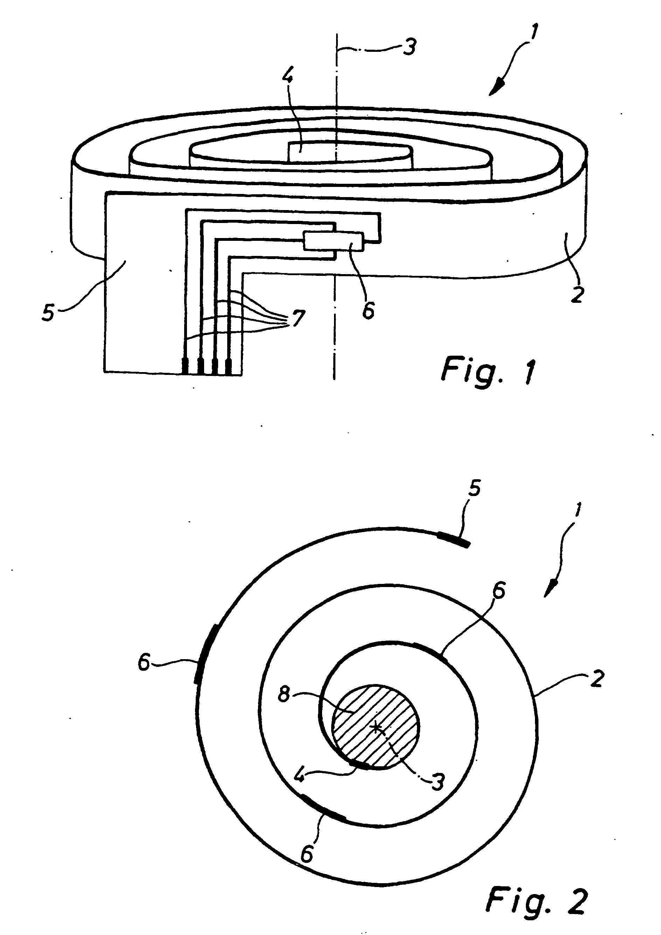

In der Fig. 1 ist beispielhaft eine Lenkwinkelmesseinrichtung 1 zur Messung des Lenkwinkels eines Lenkrades eines Fahrzeuges dargestellt. Dabei ist ein Flachbandkabel 2 deutlich erkennbar, das spiralförmig um eine in der Fig. 1 nicht dargestellte Lenksäule gewickelt ist. Die Lenksäule ist entlang einer Lenksäulenachse 3 angeordnet. Das Flachbandkabel 2 weist dabei zwei Enden auf, ein inneres Ende 4 sowie ein äußeres Ende 5. Das innere Ende 4 des Flachbandkabels 2 ist drehfest an der Lenksäule angeordnet. Das andere Ende des Flachbandkabels 2, nämlich das äußere Ende 5, ist ortsfest angeordnet und dreht sich bei einer Drehung des Lenkrades nicht mit. Auf dem Flachbandkabel 2 sind mehrere Dehnungsmessstreifen 6 angeordnet, wobei lediglich einer der Dehnungsmessstreifen 6 in Fig. 1 zu sehen ist.

Über das dargestellte Flachbandkabel 2 werden an dem Lenkrad vorhandene Schalter, Sensoren und elektrische Bauteile mit am Fahrzeug fest angeordneten anderen elektrischen Bauteilen, Regel- und Steuereinheiten sowie Auswerteeinheiten verbunden. Dazu sind im Flachbandkabel 2 nicht dargestellte Leiterbahnen vorhanden.

In der Fig. 1 ist außerdem deutlich zu sehen, dass auf dem Flachbandkabel 2 vier Leiterbahnen 7 vorhanden sind, die den Dehnungsmessstreifen 6 mit einer nicht dargestellten Auswerteeinheit verbinden.

Bei Drehung des Lenkrades bzw. der Lenksäule wird das spiralförmige Flachbandkabel 2 ab- oder aufgewickelt, je nachdem in welche Richtung das Lenkrad gedreht wird. Aufgrund dieser Ab- bzw. Aufwicklung des Flachbandkabels 2 ändert sich die Biegung und/oder Dehnung des Flachbandkabels 2. Die sich ändernde Dehnung und/oder Biegung wird von den Dehnungsmessstreifen 6 gemessen und über die Leiterbahnen 7 der Auswerteeinheit zugeführt, die aus den gemessenen Daten den Lenkwinkel des Lenkrades bestimmt.

In der Fig. 2 ist die Lenkwinkelmesseinrichtung 1 nach Fig. 1 in Draufsicht gezeigt. Dabei ist die Lenksäule 8 im Querschnitt dargestellt, an der das Flachbandkabel 2 über ihr inneres Ende 4 drehfest angeordnet ist. Deutlich zu erkennen sind drei Dehnungsmessstreifen 6, die am Flachbandkabel 2 angeordnet sind. Die Dehnungsmessstreifen 6 sind entweder an der Außen- oder Innenwölbung des spiralförmigen Flachbandkabels 2 angeordnet. Die an der Außenwölbung angeordneten Dehnungsmessstreifen 6 werden bei einer Aufwicklung des Flachbandkabels 2 aufgrund einer Lenkraddrehung in die entsprechende Richtung auf Zug beansprucht und messen eine damit verbundene Dehnung. Die auf der Innenseite angeordneten Dehnungsmessstreifen 6 werden bei der gleichen Lenkradbewegung auf Druck beansprucht und messen folglich eine negative Längenänderung. Durch das Vorhandensein mehrerer Dehnungsmessstreifen 6 an Innen- und Außenseite des spiralförmigen Flachbandkabels 2 sowie einer Mittelung der verschiedenen Messergebnisse kann eine sehr genaue Bestimmung des Lenkwinkels vorgenommen werden.

## Patentansprüche

1. Lenkwinkelmesseinrichtung (1) zur Messung des Lenkwinkels eines Lenkrades bzw. einer Lenksäule (8) eines Fahrzeuges, wobei um die Lenksäule des Fahrzeuges ein spiralförmiges Flachbandkabel (2) angeordnet ist, dessen eines Ende (4) an dem drehbaren Lenkrad bzw. an der Lenksäule (8) und dessen anderes Ende (5) ortsfest angeordnet ist, wobei am Flachbandkabel (2) wenigstens ein Messelement zur Messung der Dehnung und/oder Biegung des Flachbandkabels (2) angeordnet ist und dass eine Auswerteeinheit vorhanden ist, die aus der gemessenen Dehnung und/oder Biegung des Flachbandkabels (2) den Lenkwinkel bestimmt, **dadurch gekennzeichnet, dass** mehrere Messelemente an der Innen- und/oder Außenseite des Flachbandkabels (2) angeordnet sind, deren Messergebnisse gemittelt werden, wobei am oder im Flachbandkabel (2) elektrische Leiterbahnen (7) vorhanden sind, die die Messelemente mit der Auswerteeinheit verbinden.

2. Lenkwinkelmesseinrichtung nach Anspruch 1, **dadurch gekennzeichnet, dass** die Messelemente Dehnungsmessstreifen (6) oder Dehnungsmesssensor sind.

3. Lenkwinkelmesseinrichtung nach Anspruch 1 oder 2, **dadurch gekennzeichnet, dass** mehrere Messelemente in äquidistanten Abständen am Flachbandkabel (2) angeordnet sind.

4. Lenkwinkelmesseinrichtung nach einem der vorhergehenden Ansprüche, **dadurch gekennzeichnet, dass** die Auswerteeinheit die absolute Anzahl der Lenkrad- bzw. Lenksäulenumdrehungen bestimmt.

5. Lenkwinkelmesseinrichtung nach einem der vorhergehenden Ansprüche, **dadurch gekennzeichnet, dass** die Auswerteeinheit den absoluten Lenkwinkel bestimmt.

6. Verfahren zur Bestimmung des Lenkwinkels eines Lenkrades bzw. einer Lenksäule (8) eines Fahrzeuges mit einem spiralförmigen Flachbandkabel (2), dessen eines Ende (4) an dem drehbaren Lenkrad bzw. an der Lenksäule und dessen anderes Ende (5) ortsfest angeordnet ist, wobei die Dehnung und/oder Biegung des Flachbandkabels (2) an wenigstens einer Stelle des Flachbandkabels (2) bestimmt wird und dass aus der Dehnung und/oder Biegung des Flachbandkabels (2) auf den Lenkwinkel des Lenkrades bzw. der Lenksäule (8) geschlossen wird, **dadurch gekennzeichnet, dass** die Dehnung und/oder Biegung des Flachbandkabels (2) an mehreren Stellen bestimmt wird und die Messergebnisse gemittelt werden, wobei am oder im Flachbandkabel (2) elektrische Leiterbahnen (7) vorhanden sind, mit denen die Messelemente mit der Auswerteeinheit verbunden werden.

## Claims

1. Steering angle measuring device (1) for measuring the steering angle of a steering wheel or of a steering column (8) of a vehicle, a spiral flat cable (2), one end (4) of which is arranged on the rotatable steering wheel or on the steering column (8) and the other end (5) of which is arranged in a stationary manner, being arranged around the steering column of the vehicle, at least one measuring element for measuring the extension and/or bending of the flat cable (2) being arranged on the flat cable (2), and an evaluation unit which determines the steering angle from the measured extension and/or bending of the flat cable (2) being present, **characterized in that** a plurality of measuring elements are arranged on the inside and/or outside of the flat cable (2), the measurement results of which are averaged, electrical conductor tracks (7) which connect the measuring elements to the evaluation unit being present on or in the flat cable (2).

2. Steering angle measuring device according to Claim 1, **characterized in that** the measuring elements are wire strain gauges (6) or a strain sensor.

3. Steering angle measuring device according to Claim 1 or 2, **characterized in that** a plurality of measuring elements are arranged at equidistant spacings on the flat cable (2).

4. Steering angle measuring device according to any of the preceding Claims, **characterized in that** the evaluation unit determines the absolute number of steering wheel or steering column revolutions.

5. Steering angle measuring device according to any of the preceding Claims, **characterized in that** the evaluation unit determines the absolute steering angle.

6. Method for determining the steering angle of a steering wheel or of a steering column (8) of a vehicle with a spiral flat cable (2), one end (4) of which is arranged on the rotatable steering wheel or on the steering column and the other end (5) of which is arranged in a stationary manner, the extension and/or bending of the flat cable (2) being determined at at least one point of the flat cable (2) and the steering angle of the steering wheel or of the steering column (8) being derived from the extension and/or bending of the flat cable (2), **characterized in that** the extension and/or bending of the flat cable (2) is determined at a plurality of points and the measurement results are averaged, electrical conductor tracks (7) by means of which the measuring elements are connected to the evaluation unit being present on or in the flat cable (2).

## Revendications

1. Dispositif de mesure d'angle de braquage (1) pour mesurer l'angle de braquage d'un volant ou d'une colonne de direction (8) d'un véhicule, un câble plat (2) en forme de spirale étant disposé autour de la colonne de direction du véhicule, câble dont une extrémité (4) est disposée sur le volant rotatif ou sur la colonne de direction (8) et dont l'autre extrémité (5) est disposée de façon fixe, au moins un élément de mesure destiné à la mesure de l'allongement et/ou de la flexion du câble plat (2) étant disposé sur le câble plat (2) et une unité d'analyse étant présente, laquelle détermine l'angle de braquage à partir de l'allongement et/ou de la flexion mesuré du câble plat (2), **caractérisé en ce que** plusieurs éléments de mesure sont disposés sur le côté intérieur et/ou le côté extérieur du câble plat (2), dont les résultats de mesure font l'objet d'un calcul de moyenne, des pistes conductives (7) électriques étant présentes sur ou dans le câble plat (2), lesquelles pistes relient les éléments de mesure à l'unité d'analyse.

2. Dispositif de mesure d'angle de braquage selon la revendication 1, **caractérisé en ce que** les éléments de mesure sont des jauges de contrainte (6) ou un capteur de mesure d'allongement.

3. Dispositif de mesure d'angle de braquage selon la revendication 1 ou 2, **caractérisé en ce que** plusieurs éléments de mesure sont disposés à des intervalles équidistants sur le câble plat (2).

4. Dispositif de mesure d'angle de braquage selon l'une quelconque des revendications précédentes, **caractérisé en ce que** l'unité d'analyse détermine le nombre absolu des rotations du volant ou de la colonne de direction.

5. Dispositif de mesure d'angle de braquage selon l'une quelconque des revendications précédentes, **caractérisé en ce que** l'unité d'analyse détermine l'angle de braquage absolu.

6. Procédé destiné à déterminer l'angle de braquage d'un volant ou d'une colonne de direction (8) d'un véhicule avec un câble plat (2) en forme de spirale, dont une extrémité (4) est disposée sur le volant rotatif ou sur la colonne de direction et dont l'autre extrémité (5) est disposée de façon fixe, l'allongement et/ou la flexion du câble plat (2) étant déterminé sur au moins un emplacement du câble plat (2) et en ce que, à partir de l'allongement et/ou de la flexion du câble plat (2), on tire des conclusions sur l'angle de braquage du volant ou de la colonne de direction (8), **caractérisé en ce que** l'allongement et/ou la flexion du câble plat (2) est déterminé en plusieurs endroits et les résultats de la mesure font l'objet d'un calcul de moyenne, des pistes conductives (7) électriques étant présentes sur ou dans le câble plat (2), pistes avec lesquelles les éléments de mesure sont reliés à l'unité d'analyse.
